(19) **Europäisches Patentamt / European Patent Office / Office européen des brevets**

(11) **EP 4 564 470 A1**

(12) **EUROPEAN PATENT APPLICATION**
published in accordance with Art. 153(4) EPC

(43) Date of publication:
04.06.2025 Bulletin 2025/23

(21) Application number: 23872240.9

(22) Date of filing: 25.09.2023

(51) International Patent Classification (IPC):
$H01M\ 4/14$ (2006.01)     $H01M\ 10/12$ (2006.01)
$H01M\ 50/451$ (2021.01)     $H01M\ 4/56$ (2006.01)
$H01M\ 50/417$ (2021.01)     $H01M\ 50/446$ (2021.01)

(52) Cooperative Patent Classification (CPC):
H01M 4/14; H01M 4/56; H01M 10/12;
H01M 50/417; H01M 50/451; H01M 50/446;
H01M 2220/20; Y02E 60/10

(86) International application number:
PCT/JP2023/034670

(87) International publication number:
WO 2024/071017 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.09.2022 JP 2022153988

(71) Applicant: GS Yuasa International Ltd.
Kisshoin, Minami-ku,
Kyoto-shi, Kyoto 601-8520 (JP)

(72) Inventors:
• ANDO Kazunari
Kosai-shi, Shizuoka 431-0452 (JP)
• ITO Etsuko
Kosai-shi, Shizuoka 431-0452 (JP)

(74) Representative: Isarpatent
Patent- und Rechtsanwälte
Barth Hassa Peckmann & Partner mbB
Friedrichstraße 31
80801 München (DE)

(54) **LEAD ACID STORAGE BATTERY**

(57) Disclosed is a lead-acid battery including: a positive electrode plate; a negative electrode plate; a separator interposed between the positive electrode plate and the negative electrode plate; and an electrolyte solution, in which the positive electrode plate contains a positive electrode material, the negative electrode plate contains a negative electrode material, the negative electrode material contains a Bi element, a content of the Bi element in the negative electrode material is 100 ppm or more and 300 ppm or less on a mass basis, the separator includes a resin substrate, and a conductive layer is provided between the negative electrode plate and the resin substrate.

EP 4 564 470 A1

Fig. 1

**Description**

TECHNICAL FIELD

The present invention relates to a lead-acid battery.

BACKGROUND ART

Lead-acid batteries are in use for various applications, including automotive and industrial applications. The lead-acid battery includes a positive electrode plate, a negative electrode plate, a separator interposed between these electrode plates, and an electrolyte solution. A separator of a lead-acid battery is required to have various performances.

Patent Document 1 proposes "a lead-acid battery separator, wherein the lead-acid battery separator includes a porous membrane and/or a fibrous mat, and one or more conductive elements or nucleation additives inside or on the porous membrane and/or the fibrous mat".

Patent Document 2 proposes "a lead-acid battery separator including: a porous membrane or substrate having at least one electrically non-conductive, conductive or semiconductive layer, film, coating, deposition, or material including at least one of particles, fibers or materials, the particles, fibers, or materials including at least one of silica, silicon oxide, alumina, aluminum oxide, and combinations, blends or mixtures thereof".

Patent Document 3 proposes "a lead-acid battery including: an element in which a plurality of positive electrode plates each having a positive active material containing lead dioxide and a plurality of negative electrode plates each having a negative active material containing metal lead are alternately stacked with a separator interposed therebetween, wherein the element is immersed in an electrolyte solution to form a cell, the positive electrode plate after formation has a flatness of 4.0 mm or less, and a content of bismuth in the negative active material is 0.5 ppm or more and 250 ppm or less".

Patent Document 4 proposes a "lead-acid battery including: a negative electrode plate including a negative grid not containing Sb; a positive electrode plate including a positive grid not containing Sb and having a layer containing Sb in an amount of 0.01 to 0.20% by weight of a positive active material amount on at least a part of a surface in contact with the positive active material; and a separator inserted in between the positive electrode plate and the negative electrode plate, in which the entire surfaces of the positive electrode plate and the negative electrode plate are immersed in an electrolyte solution, and the negative active material contains Bi in an amount of 0.02 to 0.10% by weight with respect to a negative active material amount".

Patent Document 5 proposes "a lead-acid battery including a negative electrode plate including a non-Sb-based negative electrode grid and a negative active material containing 0.1 to 3% by weight of Ba and 0.1 to 2.5% by weight of graphite or carbon, wherein the negative active material contains at least one selected from the group of Sb, Sn, Bi, Zn, Se, Mn, Ca, Mg, and Sr".

PRIOR ART DOCUMENT

PATENT DOCUMENTS

Patent Document 1: JP-W-2020-533741
Patent Document 2: JP-W-2018-530125
Patent Document 3: JP-A-2021-163612
Patent Document 4: JP-A-2006-079973
Patent Document 5: JP-A-2003-142085

SUMMARY OF THE INVENTION

PROBLEMS TO BE SOLVED BY THE INVENTION

Recent lead-acid batteries, particularly, lead-acid batteries for vehicles controlled by idling stop/start (ISS) are used under conditions different from those of conventional lead-acid batteries for starter. Such lead-acid batteries are used, for example, in a partial state of charge (PSOC). When the lead-acid battery is continuously discharged without being charged from the PSOC while an engine is stopped, the depth of discharge (hereinafter, referred to as "DOD") becomes deeper. In recent years, electric loads due to electrical components and communication equipment mounted on vehicles have increased, and a discharge capacity from a lead-acid battery has also increased. In order to cope with such an increase in load of electrical components and communication equipment, conditions of a charge-discharge cycle test are becoming harder than before. For example, life improvement in a charge-discharge cycle test in which discharge is performed up to 17.5% of DOD is strongly required.

One of the factors of degradation of the lead-acid battery due to use at deep DOD is deterioration of the charge acceptability of the negative electrode material, an increase in impedance due to a high resistance layer formed at an interface between a positive electrode material and a positive grid, and the like.

When Bi is added to the negative electrode material, a charge current (energizing current) increases, so that the charge acceptability of a negative electrode plate is improved. Meanwhile, in a deep discharge cycle in which discharge is performed to a deep DOD, when the charge acceptability of the negative electrode plate is improved, unevenness of reaction occurs in an up-down direction of the negative electrode plate, and a charge-discharge reaction and a gas generation reaction tend to selectively occur in an upper portion of the negative electrode plate.

MEANS FOR SOLVING THE PROBLEMS

An aspect of the present disclosure relates to a lead-acid battery including: a positive electrode plate; a negative electrode plate; a separator interposed between the positive electrode plate and the negative electrode plate; and an electrolyte solution, in which the positive electrode plate contains a positive electrode material, the negative electrode plate contains a negative electrode material, the negative electrode material contains a Bi element, a content of the Bi element in the negative electrode material is 100 ppm or more and 300 ppm or less on a mass basis, the separator includes a resin substrate, and a conductive layer is provided between the negative electrode plate and the resin substrate.

ADVANTAGES OF THE INVENTION

According to the present disclosure, life performance of the lead-acid battery used in a deep DOD is improved.

BRIEF DESCRIPTION OF THE DRAWINGS

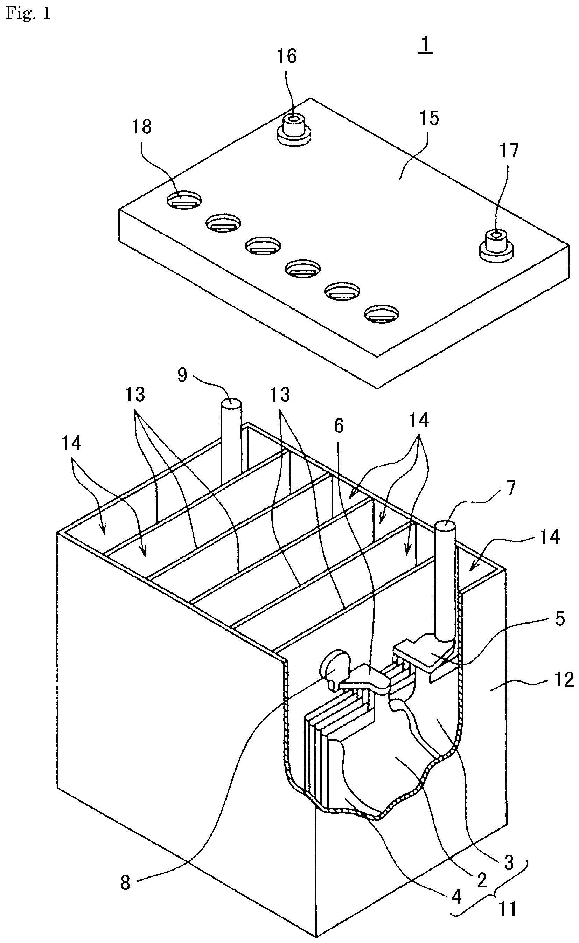

Fig. 1 is a partially cutaway perspective view showing an appearance and an internal structure of a lead-acid battery according to an embodiment of the present invention.

MODE FOR CARRYING OUT THE INVENTION

Hereinafter, embodiments of the present disclosure will be described with reference to examples, but the present disclosure is not limited to the examples described below. In the description below, specific numerical values and materials may be shown as examples, but the other numerical values and the other materials may be used as long as the effects of the present disclosure are obtained. In this specification, the expression "numerical value A to numerical value B" includes the numerical value A and the numerical value B, and can be read as "numerical value A or more and numerical value B or less". In the following description, when the lower limit and the upper limit of numerical values related to specific physical properties, specific conditions are exemplified, and the like, any of the exemplified lower limits and any of the exemplified upper limits can be arbitrarily combined unless the lower limit is equal to or more than the upper limit. When a plurality of materials are exemplified, one of the materials may be selected and used alone, or two or more of the materials may be used in combination.

The present disclosure encompasses a combination of matters recited in two or more claims voluntarily selected from a plurality of claims recited in the appended claims. That is, as long as no technical contradiction arises, matters recited in two or more claims voluntarily selected from a plurality of claims recited in the appended claims can be combined.

In the present specification, the up-down direction of the lead-acid battery or constituent elements (such as plate, container, and separator) of the lead-acid battery means the up-down direction in the vertical direction of the lead-acid battery disposed in a used state. Each of the positive electrode plate and the negative electrode plate includes a lug part for connecting to an external terminal. For example, in flooded-type batteries, the lug part is provided above the plate so as to protrude upward.

Although the lead-acid battery according to the present disclosure may be a valve regulated battery (VRLA type battery), a flooded-type battery (vent type battery) is preferable in that the action and effect due to a Bi element can be effectively utilized.

The lead-acid battery includes a positive electrode plate, a negative electrode plate, a separator interposed between the positive electrode plate and the negative electrode plate, and an electrolyte solution. The electrolyte solution contains sulfuric acid. When sulfate ions move between the positive and negative electrode plates and the electrolyte solution, charging and discharging progress. During discharging, sulfate ions move to the positive electrode plate and the negative electrode plate, so that the density of the electrolyte solution decreases. During charging, sulfate ions move from the positive electrode plate and the negative electrode plate into the electrolyte solution, so that the density of the electrolyte solution increases.

The positive electrode plate, the negative electrode plate, and the separator constitute the element. The element constitutes a cell together with the electrolyte solution. One element constitutes one cell. The lead-acid battery includes one or more cells by including one or more electrode groups. The number of positive electrode plates and negative electrode plates included in one element is not particularly limited. The element included in the lead-acid battery according to the present disclosure includes, for example, 12 or more positive electrode plates and negative electrode plates in total. The plurality of elements are usually stored in individual cell chambers and connected to each other in series.

The positive electrode plate includes the positive electrode material. The positive electrode material contains at least lead dioxide during charging and at least lead sulfate during discharging as a positive active material that exhibits a capacity through a redox reaction.

The negative electrode plate contains a negative electrode material. The negative electrode material contains at least lead during charging and at least lead sulfate during discharging as a negative active material that exhibits a capacity through a redox reaction

(1) A lead-acid battery according to an embodiment of the present disclosure includes: a positive electrode plate; a negative electrode plate; a separator interposed between the positive electrode plate and the negative electrode plate; and an electrolyte solution, in which the positive electrode plate contains a positive electrode material, the negative electrode plate contains a negative electrode material, the negative electrode material contains a Bi element, a content of the Bi element in the negative electrode material is 100 ppm or more and 300 ppm or less on a mass basis, the separator includes a resin substrate, and a conductive layer is provided between the negative electrode plate and the resin substrate.

The lead-acid battery according to an embodiment of the present invention can obtain excellent life performance even when used in a deep DOD.

(2) In the lead-acid battery according to (1) above, the conductive layer may contain a carbon material.

The lead-acid battery according to (2) above can include a conductive layer that is lightweight, has high conductivity, and has excellent ion conductivity. Electrolysis of water is promoted during charging with, as a starting point, the carbon material electrically connected to the negative electrode plate, and gas is easily generated, which is advantageous for suppressing stratification of the electrolyte solution.

(3) In the lead-acid battery according to (1) or (2) above, the carbon material may be at least one selected from the group consisting of carbon black and carbon fiber.

The lead-acid battery according to (3) above can be lighter, have higher conductivity, and include a thinner conductive layer.

(4) In the lead-acid battery according to any one of (1) to (3) above, a thickness of the conductive layer may be 1 $\mu$m or more and 30 $\mu$m or less.

According to the lead-acid battery according to (4) above, by setting the thickness of the conductive layer to 1 $\mu$m or more, a strong conductive path extending over the entire negative electrode plate is formed, and the reaction of the negative electrode plate in the up-down direction is made uniform. In addition, by setting the thickness of the conductive layer to 30 $\mu$m or less, an increase in internal resistance can be avoided as much as possible.

(5) In the lead-acid battery according to any one of (1) to (4) above, the conductive layer may be disposed on a surface of the resin substrate.

The conductive layer integrated with the resin substrate included in the lead-acid battery according to (5) above can be formed by various methods in a process of manufacturing a separator.

(6) In the lead-acid battery according to any one of (1) to (5) above, a ratio of a mass of the positive electrode material to a mass of the negative electrode material may be 1.2 or more and 1.4 or less.

According to the lead-acid battery according to (6) above, an amount of the negative electrode material used is reduced, and the lead-acid battery can be reduced in weight and cost. Even in such a case, the charge acceptability is less likely to be lowered, and sulfation of the negative electrode plate is less likely to proceed.

(7) The lead-acid battery according to any one of (1) to (6) above may be used for a vehicle controlled by idling stop/start (ISS). This is because the lead-acid battery mounted on a vehicle controlled by ISS has a great need to improve a deep discharge cycle life.

The negative electrode material according to the present disclosure contains a predetermined amount of Bi (bismuth) element. The Bi element has an action of improving charge acceptability of the negative electrode material. Such an action is considered to be caused by, for example, an action of reducing hydrogen generation overvoltage by the Bi element.

In general, in the negative electrode plate of the lead-acid battery, in a cycle test in which discharging is performed to deep DOD, unevenness of reaction is likely to occur in an up-down direction. This is because, during discharging, the negative electrode plate is likely to be discharged relatively uniformly as a whole, and during charging, the poor charged state tends to be provided due to the charging conditions (charge voltage, charging time). This is because, in the charging from the state of deep discharge, a reaction of $PbSO_4 + 2e^- \rightarrow Pb + SO_4^{2-}$ and a reaction of $2H^+ + 2e^- \rightarrow H_2$ competitively proceed at an upper portion of the negative electrode plate, so that the number of electrons that can be supplied to a lower portion of the negative electrode plate decreases. Thus, the upper portion of the negative electrode plate which is likely to be collected is selectively charged, and the lower portion of the negative electrode plate is less likely to be charged. That is, lead sulfate is likely to remain at the lower portion of the negative electrode plate. When the same charging and discharging are repeated, lead sulfate accumulates in the lower portion of the negative electrode plate, and unevenness of the reaction in the up-down direction of the negative electrode plate is promoted.

When the negative electrode plate contains a predetermined amount of the Bi element, the upper portion of the negative electrode plate is more easily charged due to improvement in charge acceptability caused by an action of reducing hydrogen generation overvoltage by the Bi element and the like. Meanwhile, in the lower portion of the negative electrode plate, the effect of improving the charge acceptability by the addition of the Bi element is limited, and the unevenness of the reaction in the up-down direction of the negative electrode plate becomes more remarkable when the Bi element is added.

On the other hand, when the conductive layer is provided between the negative electrode plate and the separator, such unevenness of the reaction in the up-down direction of the negative electrode plate is remarkably suppressed. It is considered that the conductive layer imparts an auxiliary conductive path extending over the entire negative electrode plate to the negative electrode plate. As a result, a charge current is more uniformly distributed to the entire negative electrode plate.

Bi in the negative electrode material has an action of promoting gas generation during charging by the action of reducing hydrogen generation overvoltage. By distributing a part of the charge current to a gas generation reaction, a gas is appropriately generated to cause the electrolyte solution to flow. By distributing the charge current to the entire negative electrode plate by the conductive layer, a charge reaction and the gas generation reaction of the negative electrode material at the lower portion of the negative electrode plate are promoted. The gas generated by the gas generation reaction promotes the flow of the electrolyte solution in the vicinity of the lower portion of the negative electrode plate, so that the charge-discharge reaction proceeds more uniformly throughout the negative electrode plate.

Meanwhile, the positive electrode plate disposed facing the negative electrode plate is affected by the charge-discharge reaction of the negative electrode plate. When the upper portion of the negative electrode plate is selectively charged and the unevenness of the reaction in the up-down direction of the negative electrode plate proceeds, the unevenness of the reaction in the up-down direction similarly proceeds also in the positive electrode plate. On the other hand, when the charge-discharge reaction proceeds more uniformly in the entire negative electrode plate, the charge-discharge reaction similarly proceeds more uniformly in the entire positive electrode plate also in the positive electrode plate. As a result, an increase in impedance due to deterioration of the positive electrode plate is suppressed.

By the action of uniformizing the charge-discharge reaction in the negative electrode plate and the positive electrode plate as described above, the life is improved even when a charge-discharge cycle test of the lead-acid battery is performed under severe conditions in which discharging is performed to a deep DOD (for example, DOD 17.5%).

The content of the Bi element in the negative electrode material needs to be limited to 100 ppm or more and 300 ppm or less on a mass basis. When the content of the Bi element is less than 100 ppm on a mass basis, the charge current tends to rapidly diminish when the lead-acid battery approaches the full charge state in constant voltage charging. That is, the action of improving the charge acceptability of the negative electrode material by the Bi element cannot be sufficiently obtained. A deep discharge cycle test is a condition in which it is difficult to secure an amount of charge in the first place. Therefore, the upper portion of the negative electrode plate in which current is likely to flow is selectively charged, and the lower portion of the negative electrode plate is less likely to be charged. On the other hand, when the content of the Bi element exceeds 300 ppm on a mass basis, even if the lead-acid battery approaches the full charge state in constant voltage charging, diminishment of the charge current hardly occurs, and thus the plate is likely to be locally overcharged. Thus, the increase in impedance due to deterioration of the positive electrode plate increases, and the life of the lead-acid battery tends to be shortened. The content of the Bi element in the negative electrode material is more preferably 100 ppm or more and 250 ppm or less on a mass basis, and may be 150 ppm or more and 230 ppm or less.

The conductive layer may be interposed between the negative electrode plate and the resin substrate of the separator. The conductive layer is in contact with the negative electrode plate as needed to provide an auxiliary conductive path to the negative electrode plate. The conductive layer may be a member independent of the negative electrode plate and the resin substrate of the separator, may be integrated with the negative electrode plate, or may be integrated with the resin substrate of the separator. That is, the separator may include only the resin substrate, may include the resin substrate and the conductive layer, or may further include other constituent elements. Thus, the separator and the resin substrate may have the same meaning.

The independent conductive layer may have the ion conductivity, and is preferably porous from the viewpoint of avoiding the increase in internal resistance as much as possible. The independent conductive layer may be, for example, a woven fabric, a nonwoven fabric, or the like including conductive fibers, and specifically, carbon paper, carbon cloth, or the like may be used.

The conductive layer integrated with the negative electrode plate can be formed by forming the conductive layer on the non-formed negative electrode plate and then curing and drying the conductive layer. Conductive particles may be applied to a surface of the negative electrode plate either before or after formation by a method such as spray coating.

The conductive layer integrated with the resin substrate of the separator can be formed by various methods in the process of manufacturing the separator. The conductive layer may be a composite layer of at least a part of a constituent material of the separator and a conductive material. The conductive material included in the composite layer may be a conductive fiber, a conductive particle, or the like.

Any form of the conductive layer may include a carbon material. The carbon material is lightweight, highly conductive, and suitable for forming a porous structure to ensure excellent ionic conductivity. As a result of the carbon material coming into contact with the negative electrode plate in the lead-acid battery, electrolysis of water is promoted during charging with, as a starting point, the carbon material electrically connected to the negative electrode plate, and gas is easily generated. The generated gas stirs the electrolyte solution. That is, the stratification of the electrolyte solution is suppressed not only by a driving force against the flow of the electrolyte solution by the Bi element but also by the conductive layer. Thus, a synergistic action between the suppression of stratification and the distribution of the charge current to the entire negative electrode plate becomes remarkable.

Examples of the carbon material included in the conductive layer include graphite, activate carbon, carbon black, carbon fiber, and carbon nanotube. These carbon materials have conductivity. The carbon material may be at least one selected from the group consisting of carbon black and a carbon fiber. The carbon black may be acetylene black, Ketjen black, thermal black, channel black, furnace black, lamp black, high surface area carbon black, or the like. Carbon fibers may use carbon nanofibers, carbon nanotubes, and the like.

The thickness of the conductive layer may be, for example, 1 $\mu$m or more, 2 $\mu$m or more, 5 $\mu$m or more, 10 $\mu$m or more, or 15 $\mu$m or more. The thickness of the conductive layer is, for example, 40 $\mu$m or less, and may be 30 $\mu$m or less, 25 $\mu$m or less, or 20 $\mu$m or less. The thicker the conductive layer, the stronger the auxiliary conductive path extending over the entire negative electrode plate, and the reaction in the up-down direction of the negative electrode plate is made uniform. In addition, by setting the thickness of the conductive layer to 40 $\mu$m or less, an increase in the distance between the electrode plates can be suppressed, and the increase in internal resistance can be avoided as much as possible.

The thickness of the conductive layer is obtained by measuring and averaging the thicknesses of the conductive layer at five arbitrarily selected points in the sectional photograph of the conductive layer.

The conductive layer preferably faces, for example, 80% or more of an area of a main surface of the negative electrode plate so as to distribute the charge current to the entire negative electrode plate as much as possible by the auxiliary conductive path. The area of the main surface of the negative electrode plate is an area surrounded by an outline of an orthogonal projection when the main surface is viewed from a normal direction.

A ratio of the mass of the positive electrode material to the mass of the negative electrode material (hereinafter, the ratio is also referred to as the "Mp/Mn ratio") is, for example, 1.2 or more and 1.4 or less, and may be 1.3 or more and 1.4 or less. The mass of the positive electrode material is the mass of the positive electrode material included in one positive electrode plate. The mass of the negative electrode material is the mass of the negative electrode material included in one negative electrode plate. Increasing the Mp/Mn ratio to 1.2 or more and 1.4 or less means reducing the amount of the negative electrode material used. In other words, the weight of the lead-acid battery can be reduced by setting the Mp/Mn ratio to 1.2 or more and 1.4 or less, and the cost can be reduced.

Meanwhile, when the Mp/Mn ratio is 1.2 or more and 1.4 or less, a load on the negative electrode plate considerably increases, and the charge acceptability is easily lowered. When the negative electrode material contains a predetermined amount of Bi element and includes a conductive layer between the negative electrode plate and the separator, the charge reaction proceeds more uniformly throughout the negative electrode plate, so that even when the Mp/Mn ratio is increased to 1.2 or more and 1.4 or less, the charge acceptability is less likely to decrease, and sulfation of the negative electrode plate is less likely to proceeds.

The lead-acid battery according to the present disclosure is suitable for a vehicle controlled by idling stop/start (ISS). The lead-acid battery mounted on a vehicle controlled by ISS is often used in PSOC, and excellent life performance is required in a deep discharge cycle in which discharging is performed to deep DOD. In such a lead-acid battery, pressure is easily applied to the element in a stacking direction, and the element is easily brought into close contact with the conductive layer interposed between the negative electrode plate and the separator. In this case, the charge-discharge reaction is more easily made uniform over the entire negative electrode plate. Meanwhile, the gas generated in the negative electrode plate can move upward through a gap of the electrolyte solution after passing through the conductive layer and the resin substrate. As a result, the electrolyte solution impregnated in the separator or the resin substrate can be stirred, and the effect of suppressing stratification can be further enhanced.

Examples of the constituent elements of the lead-acid battery will be described below.

(Positive electrode plate)

The positive electrode plate includes a positive current collector and a positive electrode material. The positive electrode material is held by the positive current collector. The positive electrode material is a portion obtained by removing the positive current collector from the positive electrode plate. A sticking member such as a conductive layer, a mat, or a pasting paper may be stuck to the positive electrode plate. The sticking member is used integrally with the positive electrode plate and is thus included in the constituent element of the positive electrode plate. When the positive electrode plate includes the sticking member, the positive electrode material is a portion obtained by removing the positive current collector and the sticking member from the positive electrode plate.

The positive electrode current collector may be formed by casting lead (Pb) or a lead alloy, or formed by processing a lead sheet or a lead alloy sheet. The processing method may be, for example, expanding processing or punching processing. By using a grid-like current collector as the positive current collector, the positive electrode material is easily supported.

As a lead alloy used for the positive current collector, a Pb-Ca-based alloy and a Pb-Ca-Sn-based alloy excellent in corrosion resistance and mechanical strength are preferable. The positive current collector may include metal layers having different compositions, and a single metal layer or a plurality of metal layers may be provided.

The positive electrode material contains a positive active material that exhibits a capacity through a redox reaction. The positive active material contains lead dioxide, lead sulfate, and the like. The positive electrode material may optionally contain an additive. The additive may include a reinforcing material, an antimony compound, and the like. For example, an inorganic fiber, an organic fiber, or the like can be cited as the reinforcing material.

A non-formed positive electrode plate is obtained by curing and drying the positive current collector and the positive electrode paste filled in the positive current collector. The positive electrode paste is prepared by mixing a mixture containing lead powder, water, and sulfuric acid. The positive electrode paste may optionally contain an additive. The additive may include a reinforcing material, an antimony compound, and the like. Such a positive electrode plate is also referred to as a paste-type positive electrode plate.

The positive electrode plate is obtained by forming the non-formed positive electrode plate. The formation may be performed by immersing the element including the non-formed positive electrode plate in the electrolyte solution containing sulfuric acid in the container of the lead-acid battery and charging the element. The formation may be performed before the lead-acid battery or the element is assembled.

(Negative electrode plate)

The negative electrode plate includes a negative current collector and a negative electrode material. The negative electrode material is held by the negative current collector. The negative electrode material is a portion obtained by removing the negative current collector from the negative electrode plate. A sticking member such as a conductive layer, a mat, or a pasting paper may be stuck to the negative electrode plate. The sticking member is included in a constituent element of the negative electrode plate. When the negative electrode plate includes the sticking member, the negative electrode material is a portion obtained by removing the negative current collector and the sticking member from the negative electrode plate.

The negative current collector may be formed by casting lead (Pb) or a lead alloy, or formed by processing a lead sheet or a lead alloy sheet. The processing method may be expanding processing or punching processing. When a grid-like current collector is used as the negative current collector, it is easy to support the negative electrode material.

At least one of the positive current collector and the negative current collector may be formed by expanding or punching. In a plate using a current collector (expanded grid) formed by expanding, the plate interferes with a manufacturing apparatus in a manufacturing process, and a corner portion is likely to be deformed. Such corner portions of the plate are likely to cause a short circuit that cuts into the separator. Since the separator according to the present disclosure can include a conductive layer, the separator has relatively high strength and is also excellent in that such a short circuit can be suppressed.

The lead alloy used for the negative electrode current collector may be any of a Pb-Sb-based alloy, a Pb-Ca-based alloy, and a Pb-Ca-Sn-based alloy. The lead alloy used for the negative current collector may contain, as an additive element, at least one selected from the group consisting of Ba, Ag, Al, Bi, As, Se, Cu, and the like. The negative current collector may include metal layers having different compositions, and a single metal layer or a plurality of metal layers may be provided.

The negative electrode material contains a negative active material that exhibits a capacity through a redox reaction. The negative active material contains lead, lead sulfate, and the like. The negative electrode material contains a Bi element in an amount of 100 ppm or more and 300 ppm or less on a mass basis. The negative electrode material may optionally contain other additives. The additive may include an organic expander, a carbonaceous material, and barium sulfate, and the like.

<Analysis of content of Bi element>

For the analysis of the content of the Bi element in the negative electrode material, the negative electrode plate taken out from the unused lead-acid battery or the lead-acid battery in the full charge state at the initial stage of use is used. The negative electrode plate taken out of the lead-acid battery is washed and dried prior to the analysis or the measurement.

After the negative electrode plate taken out from the lead-acid battery is washed with water and dried, the negative electrode material is collected, and a sample of the pulverized negative electrode material is provided. A solution obtained by mixing nitric acid and water at a volume ratio of 1:3 is heated to about 100°C to dissolve the sample. Thereafter, the Bi content is determined by performing ICP (Inductively Coupled Plasma) emission spectrometry on a solution obtained by filtering insoluble matters.

In the present specification, the full charge state of the flooded-type lead-acid battery is defined by the definition of JIS D 5301:2019. More specifically, the following state is defined as a full charge state: the lead-acid battery is charged with a current $2I_{20}$ (unit: A) that is twice a 20 hour rate current $I_{20}$ in a water bath at 25°C $\pm$ 2°C until the terminal voltage (unit: V) during charge measured every 15 minutes or the electrolyte solution density subjected to temperature correction to 20°C exhibits a constant value at three significant digits continuously three times. The 20 hour rate current $I_{20}$ is a current (A) of 1/20 of a numerical value of Ah described in the rated capacity. The numerical value described as the rated capacity is a numerical value in which the unit is Ah (ampere-hour). The unit of the current set based on the numerical value indicated as the rated capacity is A (amperes). In the case of a valve regulated lead-acid battery, the full charge state is a state where the lead-acid battery is subjected to constant current constant voltage charge of 2.67 V/cell (16.00 V in a lead-acid battery having a rated voltage of 12 V) at a current of $5I_{20}$ that is five times the 20 hour rate current $I_{20}$ in an air tank at 25°C$\pm$2°C, and charging is terminated when a total charging time reaches 24 hours.

The lead-acid battery in the full charge state is a lead-acid battery obtained by charging a formed lead-acid battery to the full charge state. The timing of charging the lead-acid battery to the full charge state may be immediately after the formation or after a lapse of time from the formation as long as the full charge is performed after the formation. For example, after formation, the lead-acid battery in use (preferably in the initial stage of use) may be charged.

In the present specification, the battery at the initial stage of use is a battery that has not been used for a long time and has hardly degraded.

Examples of the organic expander include lignin, lignin sulfonic acid, and a synthetic organic expander. The synthetic organic expander may be, for example, a formaldehyde condensate of a phenol compound. The organic expander may be used singly or in combination of two or more kinds thereof. The content of the organic expander in the negative electrode material is, for example, 0.01% by mass or more and 1% by mass or less.

As the carbonaceous material, carbon black, artificial graphite, natural graphite, hard carbon, soft carbon, and the like may be used. One kind of carbonaceous material may be used singly, or two or more kinds thereof may be used in combination. The content of the carbonaceous material in the negative electrode material is, for example, 0.1% by mass or more and 3% by mass or less.

The content of barium sulfate in the negative electrode material is, for example, 0.1% by mass or more and 3% by mass or less.

A non-formed negative electrode plate is obtained by curing and drying the negative current collector and the negative electrode paste filled in the negative current collector. The curing is preferably performed in an atmosphere of a temperature higher than room temperature and a high humidity. The negative electrode paste is prepared by mixing a mixture containing lead powder, water, and sulfuric acid. The negative electrode paste may optionally contain an additive. The additive may include a bismuth compound (for example, bismuth sulfate), an organic expander, a carbonaceous material, barium sulfate, and the like.

The negative electrode plate is obtained by forming the non-formed negative electrode plate. The formation may be performed by immersing the element including the non-formed negative electrode plate in the electrolyte solution containing sulfuric acid in the container of the lead-acid battery and charging the element. The formation may be performed before the lead-acid battery or the element is assembled. The negative active material in the charge state contains spongy lead.

(Separator)

(Case of having conductive layer integrated with resin substrate)

The separator includes a resin substrate and a conductive layer disposed on a surface of the resin substrate. Although the conductive layer may be disposed on each of two main surfaces of the resin substrate, it is sufficient that the conductive layer is disposed on the main surface on the negative electrode plate side.

The conductive layer disposed on the surface of the resin substrate preferably contains a carbon material from the viewpoint of lightweight and high conductivity. Among them, carbon black is preferably used from the viewpoint of excellent productivity of the separator, and for example, acetylene black, Ketjen black, high surface area carbon black, or the like can be used. The carbon material may be at least one selected from the group consisting of carbon black and a carbon fiber.

The carbon material does not necessarily cover the main surface of the resin substrate in a layered manner. The carbon material may be disposed on the main surface of the resin substrate in a form that is not the layered. Examples of the form that is not the layered include a form in which the carbon material is disposed in a dispersed island shape. Such a form may also be referred to as a coating layer covering at least a part of the main surface of the resin substrate. In the present specification, the coating layer covering at least a part of the main surface of the resin substrate even in a form that is not layered is regarded as a conductive layer.

The thickness of the conductive layer may be 1 $\mu$m or more, or may be 5 $\mu$m or more. The thickness of the conductive layer may be 1 $\mu$m to 40 $\mu$m, 5 $\mu$m to 30 $\mu$m, or 10 $\mu$m to 20 $\mu$m. The thickness of the conductive layer may be measured at any five or more locations, and an average value of the obtained measured values may be calculated.

The content of the carbon material (carbon material included in the conductive layer) in the separator may be, for example, 2% by mass or more, or 3% by mass or more. In this case, the charge current is easily uniformly distributed to the entire negative electrode plate. The content of the carbon material in the separator may be 40% by mass or less or 30% by mass or less.

Examples of the form of the resin substrate include a woven fabric, a nonwoven fabric, and a porous membrane. Among these shapes, the porous membrane is preferable from the viewpoint of productivity and cost, and the nonwoven fabric is preferable from the viewpoint of liquid retainability of the electrolyte solution. The materials of the woven fabric, the nonwoven fabric, and the porous membrane can be appropriately selected from substances generally used in the lead-acid battery.

When the conductive layer contains a carbon material, electrolysis of water is promoted particularly at the end of charge; however, oxygen gas is generated in the positive electrode. From the viewpoint of suppressing oxidation of the separator by the oxygen gas, a porous membrane may be used as the resin substrate, and a crystalline region and an amorphous region may be formed in the porous membrane to enhance crystallinity of the porous membrane.

For example, in an X-ray diffraction (XRD) spectrum of the porous membrane, a ratio R represented by $A_1/(A_1 + A_2)$ may be 0.70 or more. Here, $A_1$ is the area of the diffraction peak (first diffraction peak) having the maximum peak height among the diffraction peaks corresponding to the crystalline region. $A_2$ is the area of the diffraction peak (second diffraction peak) having the second highest peak height among the diffraction peaks corresponding to the crystalline region. Hereinafter, the porous membrane having the ratio R of 0.70 or more is also referred to as "porous membrane (F)".

The area of the diffraction peak is determined by fitting the diffraction peak by the crystalline region in the XRD spectrum of the porous membrane (F). Using the obtained area $A_1$ of the first diffraction peak and the obtained area $A_2$ of the second diffraction peak, the ratio R is obtained from the above formula.

The higher the ratio R, the higher the crystallinity of the porous membrane, and the higher the oxidation resistance of the porous membrane. The oxidation resistance is also enhanced by adding oil to the porous membrane. However, the oil may increase the resistance of the porous membrane. Thus, it is preferable to enhance the crystallinity of the porous membrane to enhance the oxidation resistance of the porous membrane. When the ratio R is 0.90 or less, the flexibility of the porous membrane can be easily ensured, and the porous membrane can be easily manufactured.

From the viewpoint of securing higher oxidation resistance of the porous membrane, the ratio R may be 0.75 or more. The ratio R may be 0.90 or less, 0.85 or less, or 0.80 or less.

The porous membrane (F) includes a crystalline region where molecules of a constituent material of the porous membrane are relatively regularly arranged (that is, the alignment property is high), and an amorphous region having a low alignment property. Thus, in the XRD spectrum of the porous membrane (F), the diffraction peak due to the crystalline region is observed, and scattered light due to the amorphous region is observed as a halo. When the ratio R is 0.70 or more, more excellent PSOC life performance can be obtained.

The porous membrane (F) includes a polymer material (hereinafter, also referred to as a base polymer). The base polymer includes a crystalline polymer. The porous membrane (F) contains, for example, polyolefin. The polyolefin is a polymer containing at least an olefin unit (monomer unit derived from olefin).

The porous membrane (F) preferably contains a polyolefin, and more preferably contains a polyolefin containing at least an ethylene unit. In such a porous membrane (F), it is relatively easy to adjust the ratio R. When the porous membrane (F) contains polyolefin containing at least an ethylene unit, the first diffraction peak corresponds to a (110) plane by the crystalline region, and the second diffraction peak corresponds to a (200) plane by the crystalline region. The diffraction peak corresponding to the (110) plane of the crystalline region is observed in a range where $2\theta$ is 20° or more and 22.5° or less, and the diffraction peak corresponding to the (200) plane of the crystalline region is observed in a range where $2\theta$ is 23° or more and 24.5° or less. The halo in the amorphous region is observed in a range where $2\theta$ is 17° or more and 27° or less.

As the base polymer, polyolefin and another base polymer may be used in combination. For example, the ratio of the polyolefin in the entire base polymer contained in the porous membrane (F) is 50% by mass or more, may be 80% by mass or more, or be 90% by mass or more. The ratio of the polyolefin is, for example, 100% by mass or less. The base polymer may be configured of only the polyolefin. When the ratio of the polyolefin is as large as described above, the oxidation resistance of the porous membrane (F) tends to be low; however, even in such a case, high life performance can be secured by setting the ratio R within the above range.

Examples of the polyolefin include a homopolymer of an olefin, a copolymer containing different olefin units, and a copolymer containing the olefin unit and a copolymerizable monomer unit. The copolymer containing the olefin unit and the copolymerizable monomer unit may contain one kind or two or more kinds of olefin units. Moreover, the copolymer containing the olefin unit and the copolymerizable monomer unit may contain one kind or two or more kinds of copolymerizable monomer units. The copolymerizable monomer unit is a monomer unit derived from a **polymerizable** monomer that is not the olefin but can be copolymerized with the olefin.

For example, a polymer containing at least a $C_{2-3}$ olefin as a monomer unit can be cited as the polyolefin. At least one selected from the group consisting of ethylene and propylene can be cited as the $C_{2-3}$ olefin. As the polyolefin, for example, polyethylene, polypropylene, an ethylene-propylene copolymer, and the like are preferable. Among them, polyethylene and an ethylene-propylene copolymer, which are polyolefins containing at least an ethylene unit, are preferable. A polyolefin containing an ethylene unit and another polyolefin may be used in combination.

In order to enhance the oxidation resistance of the resin substrate, it is also preferable to provide a rib on a surface of the resin substrate facing the positive electrode plate. Since a gap is formed between the resin substrate and the positive electrode plate by the rib, the oxidation degradation of the resin substrate is reduced.

For example, the resin substrate including the rib includes a base and a rib erected from a surface of the base. The rib may be provided only on a surface on the positive electrode plate side of the base, or provided on both surfaces on the positive electrode plate side and the negative electrode plate side. The base of the resin substrate is a portion of a constituent part of the resin substrate excluding a protrusion such as the rib, and refers to a sheet-shaped portion that defines the outer shape of the resin substrate.

The height of the rib may be 0.05 mm or more. The height of the rib may be less than or equal to 1.2 mm. The height of the rib is a height (protrusion height) of a portion protruding from a surface of the base.

The height of the rib provided in a region opposite to the positive electrode plate in the region of the resin substrate may be 0.4 mm or more. The height of the rib provided in the region opposite to the positive electrode plate in the region of the resin substrate may be 1.2 mm or less.

The resin substrate may contain oil. In this case, the effect of suppressing oxidation degradation of the resin substrate is further enhanced. The oil refers to a hydrophobic substance that is liquid at room temperature (a temperature greater than or equal to 20°C and less than or equal to 35°C) and is separated from water. The oil includes naturally occurring oil, mineral oil, synthetic oil, and the like, and mineral oil, synthetic oil, and the like are preferable. For example, paraffin oil, silicone oil, or the like can be preferably used. The resin substrate may contain one oil or two or more oils in combination.

The content of the oil in the resin substrate is preferably 11% by mass or more and 18% by mass or less. When the content of the oil is in such a range, the resistance of the resin substrate can be suppressed to be relatively low, and the oxidation resistance of the resin substrate can be efficiently enhanced.

The resin substrate may contain inorganic particles. The inorganic particles do not contain a constituent material of the conductive layer disposed on the surface of the resin substrate.

For example, ceramic particles are preferable for the inorganic particles. For example, at least one selected from the group consisting of silica, alumina, and titania can be cited as the ceramic constituting the ceramic particle.

The content of the inorganic particles in the resin substrate may be, for example, 40% by mass or more. The content of the inorganic particles is, for example, 80% by mass or less and may be 70% by mass or less.

At this time, the bending degree of the pores of the resin substrate is preferably 5 or more. Thus, the strength of the resin substrate can be increased. The bending degree of the pores of the resin substrate may be 20 or more. The bending degree of the pore is, for example, 150 or less, and may be 70 or less.

The bending degree of the pore is determined by a mercury intrusion method. The bending degree is expressed by the following formula.

[Mathematical formula 1]

$$\xi = \sqrt{\frac{\rho}{24K(1 + \rho V_{tot})} \times X}$$

(in the formula, $\xi$: bending degree, $\rho$: density, K is permeability, $V_{tot}$: total pore volume, and X: differential pore distribution.)

The bending degree can be controlled by, for example, the following method in a process for producing a resin substrate described later.

The affinity between the pore-forming additive and the base polymer of the resin substrate is adjusted.

The resin substrate contains inorganic particles, and the type and particle size of the inorganic particles are selected.

The functional group or atom present on a surface of the inorganic particle is adjusted.

The type and composition of the solvent at the time of extracting and removing the pore-forming additive, extraction conditions (extraction time, extraction temperature, rate of solvent supply, etc.), and the like are adjusted.

The separator may have a sheet shape, or a sheet bent in a bellows shape may be used as the separator. The separator may be formed into a bag shape. Either one of the positive electrode plate and the negative electrode plate may be wrapped in the bag-shaped separator.

The thickness of the separator including the conductive layer is preferably 0.10 mm or more and 0.30 mm or less. When the thickness is in such a range, the increase in the internal resistance of the lead-acid battery can be suppressed, and the effect of suppressing oxidation degradation of the separator can also be enhanced. The thickness of the separator may be 0.15 mm or more. The thickness of the separator may be 0.25 mm or less or 0.20 mm or less. The thickness of the separator means an average thickness in a portion of the separator facing the electrode material. When the resin substrate includes the base and the rib erected from at least one surface of the base, the thickness of the separator is an average thickness in a part corresponding to the base.

The conductive layer may be formed by being disposed on the surface of the resin substrate. The method for disposing the conductive layer is not particularly limited. For example, in the case of a carbon material, the carbon material may be formed by applying a carbon material, a composition containing the carbon material, or a dispersion liquid containing the carbon material to the surface of the resin substrate. The application method is not particularly limited, and a doctor blade method, a roller coating method, a spray coating method, an immersion method, a vapor deposition method, a printing method, or another method may be used. Examples of the dispersion liquid containing the carbon material include a dispersion liquid in which the carbon material is dispersed in a dispersion medium (water and/or organic solvent). The amount and thickness of the carbon material disposed on the surface of the resin substrate can be adjusted by controlling the amount of the applied carbon material.

The porous membrane (F) is obtained, for example, by extrusion molding a resin composition containing a base polymer and a pore-forming additive, into a sheet shape, stretching the resin composition, and then removing at least a portion of the pore-forming additive. The resin composition may contain a permeant (surfactant) and the like. By removing at least a portion of the pore-forming additive, micropores are formed in a matrix of the base polymer. The sheet-shaped porous membrane (F) is dried as necessary after removing the pore-forming additive. For example, the ratio R can be adjusted by adjusting at least one selected from the group consisting of a cooling rate of a sheet during extrusion molding, a stretch ratio during stretching, and the temperature during drying. For example, when the sheet is rapidly cooled at the time of extrusion molding, the stretch ratio is increased, or the temperature at the time of drying treatment is lowered, the ratio R tends to increase. The stretching may be performed by biaxial stretching, and is usually performed by uniaxial stretching.

The sheet-shaped resin substrate may be processed into a bag shape as necessary. When the separator in which the conductive layer is disposed on only one main surface of the resin substrate is processed into a bag shape, the conductive layer is disposed on either the inner or outer surface of the bag.

In the resin substrate including the rib, the rib may be formed when the resin composition is extrusion-molded into a sheet shape. The rib may be formed by pressing the sheet with a roller having a groove corresponding to each rib after molding the resin composition into a sheet shape or after removing the pore-forming additive.

Examples of the pore-forming additive include a liquid pore-forming additive that is liquid at room temperature (a temperature of 20°C or higher and 35°C or lower) and a solid pore-forming additive that is solid. The oil may be used as a liquid pore-forming additive. In this case, if a part of the oil remains, the porous membrane (F) containing the oil is obtained. When the oil is extracted and removed, the content of the oil in the porous membrane (F) is adjusted by adjusting the type and composition of the solvent, extraction conditions (extraction time, extraction temperature, rate of solvent supply, etc.), and the like. The pore-forming additive may be used singly or in combination of two or more kinds thereof. The oil and another pore-forming additive may be used in combination. The liquid pore-forming additive and the solid pore-forming additive may be used in combination. As the solid pore-forming additive, for example, a polymer powder can be used.

The amount of the pore-forming additive in the porous membrane (F) is, for example, 30 parts by mass or more per 100 parts by mass of the base polymer. The amount of the pore-forming additive is, for example, 60 parts by mass or less per 100 parts by mass of the base polymer.

For example, the surfactant as the permeant may be either an ionic surfactant or a nonionic surfactant. The surfactant may be used singly or in combination of two or more kinds thereof.

For example, the content of the permeant in the porous membrane (F) is 0.01% by mass or more, and may be 0.1% by mass or more. The content of the permeant in the porous membrane (F) may be 10% by mass or less.

(Case where separator does not include conductive layer)

When the separator does not include a conductive layer, a conductive layer independent of the separator may be used. In that case, the resin substrate described above can be used as a separator.

<Analysis or measurement of separator>

(Preparation of separator)

For analysis or size measurement of the separator, an unused separator or a separator taken out from the lead-acid battery in the full charge state at the initial stage of use is used. The separator taken out of the lead-acid battery is washed and dried prior to the analysis or the measurement.

The separator taken out of the lead-acid battery is washed and dried in the following procedure. The separator taken out of the lead-acid battery is immersed in pure water for 1 hour to remove sulfuric acid in the separator. Subsequently, the separator is taken out of a liquid in which the separator has been immersed, left to stand in an environment of 25°C $\pm$ 5°C for 16 hours or more, and dried. For the separator having the porous membrane and the conductive layer, the conductive layer is removed by polishing, and then the XRD spectrum of the porous membrane is measured.

(XRD spectrum)

The XRD spectrum of the porous membrane is measured by irradiation with X-rays from a direction perpendicular to the surface of the porous membrane. A sample for measurement is prepared by processing a portion of the porous membrane facing the electrode material into a strip shape. In the porous membrane including the rib, the base portion is processed into a strip shape so as not to include the rib, thereby preparing the sample. Measurement and fitting of the XRD spectrum are performed under the following measurement conditions.

(Measurement conditions)

Measuring apparatus: RINT-TTR2, manufactured by Rigaku Corporation
Fitting: FT (step scan) method
Measurement angle range: 15 to 35°
Step width: 0.02°
Measurement speed: 5°/min
XRD data processing: XRD pattern analysis software (PDXL2, manufactured by Rigaku Corporation) was used.

(Thickness of separator and height of rib)

The thickness of the separator is obtained by measuring and averaging the thicknesses of the separator at five arbitrarily selected points in the sectional photograph of the separator. The thickness of the conductive layer of the separator having the conductive layer is also determined by the same method.

The height of the rib is determined by the following procedure. First, arbitrary ten positions of the rib are selected in the cross-sectional photograph of the separator. Next, the height of the rib (height from the surface of the base portion) is measured at each of the selected ten positions. Next, the height of the rib is determined by averaging the heights measured at the ten positions.

(Oil content in porous membrane)

The portion of the porous membrane facing the electrode material is processed into a strip shape to prepare a sample (hereinafter, referred to as a sample A). When the conductive layer is provided on the surface of the porous membrane, the conductive layer is removed by polishing to prepare a sample. In the separator including the rib, the base portion is processed into a strip shape so as not to include the rib, thereby preparing the sample A.

About 0.5 g of the sample A is collected, and accurately weighed to obtain the mass (m0) of the initial sample A. The weighed sample A is placed in a glass beaker having an appropriate size, and 50 mL of n-hexane is added. Subsequently, an oil content contained in the sample A is eluted into the n-hexane by applying ultrasonic waves to the sample A for about 30 minutes and all a beaker. Subsequently, the sample A is taken out of the n-hexane, dried at room temperature (temperature of 20°C or higher and 35°C or lower) in an atmosphere, and then weighed to obtain the mass (m1) of the sample A after oil removal. Then, the content of the oil is calculated by the following equation. The oil content is determined for the ten samples A, and the average value is calculated. The obtained average value is defined as the content of the oil in the porous membrane.

$$\text{Content of oil (\% by mass)} = 100 \times (m0 - m1)/m0$$

(Content of inorganic particles in resin substrate)

The portion of the resin substrate facing the electrode material is processed into a strip shape to prepare a sample (hereinafter, referred to as a sample A'). A part of the sample A' is collected, accurately weighed, then placed in a platinum crucible, and heated with a Bunsen burner until no white smoke comes out. Subsequently, in an electric furnace (550°C $\pm$ 10°C in oxygen stream), the obtained sample is heated for about 1 hour and incinerated, and the incinerated product is weighed. The ratio (percentage) of the mass of the incinerated product to a mass of the sample A' is calculated, and set to the content (% by mass) of the inorganic particles. The content of the inorganic particles is determined for the ten samples A, and the average value is calculated. The obtained average value is defined as the content of inorganic particles (inorganic particles other than a carbon material) in the resin substrate.

(Content of permeant in porous membrane)

A part of the sample A prepared similarly to above is collected, accurately weighed, and then dried for greater than or equal to 12 hours at room temperature (temperature greater than or equal to 20°C and less than or equal to 35°C) under a reduced pressure environment lower than atmospheric pressure. The dried product is placed in a platinum cell and set in a thermogravimetric measuring apparatus, and the temperature is increased from room temperature to 800°C $\pm$ 1°C at a temperature rising rate of 10 K/min. An amount of weight loss when the temperature is increased from room temperature to 250°C $\pm$ 1°C is set to the mass of the permeant, and the ratio (percentage) of the mass of the permeant to the mass of the sample A is calculated and set to the content (% by mass) of the permeant. Q5000IR manufactured by T.A. Instruments is used as the thermogravimetric measuring apparatus. The content of the permeant is determined for the ten samples A, and the average value is calculated. The obtained average value is defined as the content of the permeant in the porous membrane.

(Bending degree)

Each term (density, total pore volume, permeability, and differential pore distribution) in the above formula for obtaining the bending degree is obtained by the following procedure. First, a portion of the resin substrate facing the electrode material is cut into a size of 20 mm in length $\times$ 5 mm in width to prepare a sample (sample B). Next, the sample B is measured under the following conditions using a mercury porosimeter, thereby obtaining the above items.

Mercury porosimeter: Autopore IV 9510, manufactured by Shimadzu Corporation
Pressure range for measurement: 4 psia ($\approx$ 27.6 kPa) or more and 60,000 psia ($\approx$ 414 MPa) or less
Pore distribution: 0.01 $\mu$m or more and 50 $\mu$m or less

(Electrolyte solution)

The electrolyte solution is an aqueous solution containing sulfuric acid. The electrolyte solution may be gelled as necessary.
The electrolyte solution may further contain at least one metal ion selected from the group consisting of Na ions, Li ions, Mg ions, and Al ions.
For example, a density of the electrolyte solution at 20°C is 1.10 or more. The density of the electrolyte solution at 20°C may be 1.35 or less. These densities are values for the electrolyte solution of the lead-acid battery in the full charge state.
Fig. 1 shows an appearance of an example of the lead-acid battery of the embodiment of the present invention. A lead-acid battery 1 includes a container 12 that stores an element 11 and an electrolyte solution (not shown). An inside of the container 12 is partitioned by partitions 13 into a plurality of cell chambers 14. Each of the cell chambers 14 contains one element 11. An opening of the container 12 is closed with a lid 15 having a negative electrode terminal 16 and a positive electrode terminal 17. A vent plug 18 is provided in the lid 15 for each cell chamber. At the time of water addition, the vent plug 18 is removed to supply a water addition liquid. The vent plug 18 may have a function of discharging gas generated in the cell chamber 14 to the outside of the battery.

The element 11 is configured by laminating a plurality of negative electrode plates 2 and a plurality of positive electrode plates 3 with a separator 4 interposed therebetween. At this point, the bag-shaped separator 4 storing the negative electrode plate 2 is shown, but the form of the separator is not particularly limited. In the cell chamber 14 located at one end of the container 12, a negative electrode shelf 6 connecting the plurality of negative electrode plates 2 in parallel is connected to a penetrating connection body 8, and a positive electrode shelf 5 connecting the plurality of positive electrode plates 3 in parallel is connected to a positive pole 7. The positive pole 7 is connected to the positive electrode terminal 17 outside the lid 15. In the cell chamber 14 located at the other end of the container 12, a negative pole 9 is connected to the negative electrode shelf 6, and the penetrating connection body 8 is connected to the positive electrode shelf 5. The negative pole 9 is connected to the negative electrode terminal 16 outside the lid 15. Each of the penetrating connection bodies 8 passes through a through-hole provided in the partition 13 to connect the elements 11 of the adjacent cell chambers 14 in series.

Hereinafter, a DOD 17.5% life test will be described.

The DOD 17.5% life is evaluated based on the number of cycles until reaching the life in the following charge-discharge cycle test in accordance with JIS D 5306: 2021.

The lead-acid battery is placed under an atmosphere of 25°C $\pm$ 2°C. In order to perform the test safely, purified water is added up to a maximum liquid level indicator before a liquid level falls below a minimum liquid level indicator.

For a lead-acid battery having a rated voltage of 12 V in the full charge state, the following conditions 1) to 7) are sequentially performed, and repeated as one unit.

1) Discharging is performed at a discharge current of $4I_{20}$ for 2.5 hours, and the voltage at the end of discharge is recorded.
2) Charging is performed at a charge voltage of 14.4 V (limiting current: $7I_{20}$) for 2400 seconds.
3) Discharging is performed at a discharge current of $7I_{20}$ for 1800 seconds, and the voltage at the end of discharge is recorded.
4) In addition, 2) and 3) are alternately performed 85 times, and repeated 86 times as one unit.
5) Charging is performed at a charge voltage of 16.00 V $\pm$ 0.05 V (limiting current: $5I_{20}$) for 18 hours.
6) A 20-hour rate capacity test is performed.
7) Charging is performed at a charge voltage of 16.00 V $\pm$ 0.05 V (limiting current: $5I_{20}$) for 24 hours.

The test is ended when a discharge end voltage measured at the time of discharge in 3) above has reached 10.0 V or less. The number of times of life is the cycle number in 2) and 3) above in which the discharge end voltage is maintained at 10.0 V or more.

The 20-hour rate capacity test is performed in the following manner in accordance with JIS D5301:2019.

a) The test battery is placed in a water bath at 25 $\pm$ 2°C.
b) The battery is charged with a current $2I_{20}$ that is twice a 20 hour rate current $I_{20}$ until a terminal voltage during charge measured every 15 minutes or an electrolyte solution density subjected to temperature correction to 20°C exhibits a constant value at three significant digits continuously three times. After 1 hour from the completion of charge, it is confirmed that an electrolyte solution temperature of the cell in the center is 25 $\pm$ 2°C. After the electrolyte solution temperature is checked, the test battery is discharged at $I_{20}$ until the terminal voltage drops to 10.50 V $\pm$ 0.05 V.

The matters described in the present specification can be arbitrarily combined.

[Examples]

Hereinafter, the present invention will be specifically described based on examples, but the present invention is not limited to the following examples.

(Examples 1 to 9)

(1) Preparation and evaluation of separator

A resin composition containing 100 parts by mass of polyethylene, 160 parts by mass of silica particles, 80 parts by mass of paraffin-based oil as a pore-forming additive, and 2 parts by mass of a permeant was extrusion-molded into a sheet shape, and stretched, and then a portion of the pore-forming additive was removed to obtain a porous membrane including a rib on one surface.

In the XRD spectrum of the porous membrane, the diffraction peak corresponding to the (110) plane of the crystalline region of polyethylene was observed in a range of $2\theta = 21.5°$ to $22.5°$, and the diffraction peak corresponding to the (200) plane was observed in a range of $2\theta = 23°$ to $24.5°$. The halo due to the amorphous region was broadly observed in a wide range of $2\theta = 17°$ to $27°$. The ratio R of the porous membrane was 0.70. The ratio R was controlled by the cooling rate of the sheet extrusion-molded and the ratio of the stretching treatment.

Next, conductive layers having different thicknesses were formed on one main surface (main surface facing the negative electrode plate) of the porous membrane to form separators for use in batteries A1 to A9 of Examples 1 to 9, respectively. The conductive layer was formed by first depositing a mixture of silica and the carbon material on the main surface of the porous membrane, and then depositing a carbon layer thereon by a roller coating method or a spray coating method. The thicknesses of the conductive layers of the batteries A1 to A9 are as shown in Table 1. The thickness of the porous membrane was constant at 0.20 mm.

The oil content of the resin substrate determined by the procedure described above was 11 to 18% by mass, and the content of the silica particles was 60% by mass. The height of the rib determined by the procedure described above was 0.60 mm. The thickness of the separator (thickness of the base) determined by the procedure described above was 0.20 mm.

The sheet-shaped separator obtained by the above procedure was folded in two so that the rib was disposed on the outer surface to form a bag. Next, the overlapped both ends were pressure-bonded to obtain a bag-shaped separator. The inner surface of the bag-shaped separator is a surface on which the conductive layer is disposed.

The ratio R of the porous membrane (F) in the separator, the oil content, the content of silica particles, the thickness of the separator, and the height of the rib are values obtained for the separator before the production of the lead-acid battery. These values are almost the same as the values measured by the procedure described above for the separator taken out from the produced lead-acid battery.

(2) Preparation of positive electrode plate

Lead oxide, a reinforcing material (synthetic resin fiber), water, and sulfuric acid were mixed to prepare a positive electrode paste. The positive electrode paste was filled in a mesh portion of an expanded grid made of an antimony-free Pb-Ca-Sn-based alloy, cured, and dried to obtain a non-formed positive electrode plate having a width of 100 mm, a height of 110 mm, and a thickness of 1.6 mm.

(3) Preparation of negative electrode plate

Lead oxide, bismuth sulfate ($Bi_2(SO_4)_3$), carbon black, barium sulfate, lignin, water, and sulfuric acid were mixed to prepare a negative electrode paste. The negative electrode paste was filled in a mesh portion of an expanded grid made of an antimony-free Pb-Ca-Sn-based alloy, cured, and dried to obtain a non-formed negative electrode plate having a width of 100 mm, a height of 110 mm, and a thickness of 1.3 mm. The amount of bismuth sulfate used was adjusted so that the content of the Bi element in the negative electrode plate taken out from the lead-acid battery in the full charge state was 100 ppm on a mass basis. The amounts of the carbon black, the barium sulfate, and the lignin used were adjusted so that the content of each component was 0.3% by mass, 2.1% by mass, and 0.1% by mass, respectively, for the negative electrode plate taken out from the lead-acid battery in the full charge state.

(4) Production of lead-acid battery

The non-formed negative electrode plate was stored in a bag-shaped separator, and stacked with the positive electrode plate, and an element was formed of seven non-formed negative electrode plates and six non-formed positive electrode plates. The ratio of the mass of the positive electrode material to the mass of the negative electrode material: Mp/Mn was 1.2.

Lug portions of the positive electrode plates and lug portions of the negative electrode plates were welded to the positive electrode shelf and the negative electrode shelf by a cast-on strap (COS) method. The element was inserted into a polypropylene container, and filled with an electrolyte solution, and formation was performed in the container to assemble a flooded-type lead-acid battery having a rated voltage of 12 V and a 5-hour rate capacity of 30 Ah. Here, the 5-hour rate capacity is a capacity when discharging is performed at the current (A) of 1/5 of the numerical value of Ah described in the rated capacity. In the container, six elements are connected in series.

As the electrolyte solution, an aqueous sulfuric acid solution was used. The density of the electrolyte solution after the formation at 20°C was 1.285.

The DOD 17.5% life test was performed by the procedure described above using the obtained lead-acid battery, and the life performance was evaluated. The life performance was evaluated by a relative value of the number of cycles N until the life was reached. The relative value of the number of cycles N is a value when the number of cycles N of the battery CA1 of Comparative Example 1 is 100.

(Comparative Example 1)

A battery CA1 of Comparative Example 1 was produced and evaluated similarly to in Example 1 except that the amount of bismuth sulfate used was adjusted so that the content of the Bi element was 50 ppm on a mass basis with respect to the negative electrode plate taken out from the lead-acid battery in the full charge state and a porous membrane (thickness: 0.2 mm) without conductive layer was used.

(Comparative Examples 2 and 3)

Batteries CA2 and CA3 of Comparative Examples 2 and 3 were produced and evaluated similarly to in Examples 1 and 8 except that the amount of bismuth sulfate used was adjusted so that the content of the Bi element in the negative electrode plate taken out from the lead-acid battery in the full charge state was 50 ppm on a mass basis.

(Comparative Examples 4 to 6)

Batteries CA4 to CA6 of Comparative Examples 4 to 6 were produced and evaluated similarly to in Comparative Examples 1 to 3 except that the amount of bismuth sulfate used was adjusted so that the content of the Bi element in the negative electrode plate taken out from the lead-acid battery in the full charge state was 80 ppm on a mass basis.

(Comparative Example 7)

A battery CA7 of Comparative Example 7 was produced and evaluated similarly to in Example 1 except for using a porous membrane (thickness: 0.20 mm) without conductive layer.

(Comparative Example 8, Examples 10 to 18)

Batteries CA8 and A10 to A18 of Comparative Example 8 and Examples 10 to 18 were produced and evaluated similarly to in Comparative Example 7 and Examples 1 to 9 except that the amount of bismuth sulfate used was adjusted so that the content of the Bi element in the negative electrode plate taken out from the lead-acid battery in the full charge state was 200 ppm on a mass basis.

(Comparative Example 9, Examples 19 to 27)

Batteries CA9 and A19 to A27 of Comparative Example 9 and Examples 19 to 27 were produced and evaluated similarly to in Comparative Example 7 and Examples 1 to 9 except that the amount of bismuth sulfate used was adjusted so that the content of the Bi element in the negative electrode plate taken out from the lead-acid battery in the full charge state was 300 ppm on a mass basis.

(Comparative Examples 10 to 12)

Batteries CA10 to CA12 of Comparative Examples 10 to 12 were produced and evaluated similarly to in Comparative Examples 4 to 6 except that the amount of bismuth sulfate used was adjusted so that the content of the Bi element in the negative electrode plate taken out from the lead-acid battery in the full charge state was 350 ppm on a mass basis.

[Table 1]

| Battery | Bi content (ppm) | Conductive layer | Thickness of conductive layer (μm) | Mp/Mn | Life performance (Relative value) |
|---------|------------------|------------------|------------------------------------|-------|-----------------------------------|
| CA1 | 50 | Absent | - | 120 | 100 |
| CA2 | 50 | Present | 1 | 120 | 99 |
| CA3 | 50 | Present | 30 | 120 | 101 |
| CA4 | 80 | Absent | - | 120 | 100 |
| CA5 | 80 | Present | 1 | 120 | 101 |
| CA6 | 80 | Present | 30 | 120 | 100 |
| CA7 | 100 | Absent | - | 120 | 101 |

(continued)

| Battery | Bi content (ppm) | Conductive layer | Thickness of conductive layer ($\mu$m) | Mp/Mn | Life performance (Relative value) |
|---|---|---|---|---|---|
| A1 | 100 | Present | 1 | 120 | 115 |
| A2 | 100 | Present | 2 | 120 | 125 |
| A3 | 100 | Present | 5 | 120 | 128 |
| A4 | 100 | Present | 10 | 120 | 131 |
| A5 | 100 | Present | 15 | 120 | 134 |
| A6 | 100 | Present | 19 | 120 | 137 |
| A7 | 100 | Present | 20 | 120 | 140 |
| A8 | 100 | Present | 30 | 120 | 141 |
| A9 | 100 | Present | 40 | 120 | 140 |
| CA8 | 200 | Absent | - | 120 | 100 |
| A10 | 200 | Present | 1 | 120 | 116 |
| A11 | 200 | Present | 2 | 120 | 126 |
| A12 | 200 | Present | 5 | 120 | 130 |
| A13 | 200 | Present | 10 | 120 | 134 |
| A14 | 200 | Present | 15 | 120 | 138 |
| A15 | 200 | Present | 19 | 120 | 142 |
| A16 | 200 | Present | 20 | 120 | 146 |
| A17 | 200 | Present | 30 | 120 | 145 |
| A18 | 200 | Present | 40 | 120 | 146 |
| CA9 | 300 | Absent | - | 120 | 101 |
| A19 | 300 | Present | 1 | 120 | 116 |
| A20 | 300 | Present | 2 | 120 | 126 |
| A21 | 300 | Present | 5 | 120 | 131 |
| A22 | 300 | Present | 10 | 120 | 136 |
| A23 | 300 | Present | 15 | 120 | 141 |
| A24 | 300 | Present | 19 | 120 | 146 |
| A25 | 300 | Present | 20 | 120 | 151 |
| A26 | 300 | Present | 30 | 120 | 151 |
| A27 | 300 | Present | 40 | 120 | 150 |
| CA10 | 350 | Absent | - | 120 | 95 |
| CA11 | 350 | Present | 1 | 120 | 97 |
| CA12 | 350 | Present | 30 | 120 | 98 |

As shown in Table 1, when the content of the Bi element in the negative electrode material was 100 to 300 ppm and the conductive layer was provided between the negative electrode plate and the resin substrate, the life performance was significantly improved. In particular, when the thickness of the conductive layer is 5 $\mu$m or more, improvement in life performance is remarkable.

(Examples 28 to 31)

Batteries A28 to A31 of Examples 28 to 31 were produced and evaluated similarly to Example 10 except that the Mp/Mn ratio was changed as shown in Table 2.

(Examples 32 to 35)

Batteries A32 to A35 of Examples 32 to 35 were produced and evaluated similarly to Example 17 except that the Mp/Mn ratio was changed as shown in Table 2.

[Table 2]

| Battery | Bi content (ppm) | Conductive layer | Thickness of conductive layer (μm) | Mp/Mn | Life performance (Relative value) |
|---|---|---|---|---|---|
| A28 | 200 | Present | 1 | 1.1 | 110 |
| A10 | 200 | Present | 1 | 1.2 | 116 |
| A29 | 200 | Present | 1 | 1.3 | 130 |
| A30 | 200 | Present | 1 | 1.4 | 120 |
| A31 | 200 | Present | 1 | 1.5 | 105 |
| A32 | 200 | Present | 30 | 1.1 | 139 |
| A17 | 200 | Present | 30 | 1.2 | 145 |
| A33 | 200 | Present | 30 | 1.3 | 159 |
| A34 | 200 | Present | 30 | 1.4 | 149 |
| A35 | 200 | Present | 30 | 1.5 | 105 |

As shown in Table 2, when the Mp/Mn ratio was 1.2 to 1.4, the life performance was significantly improved.

INDUSTRIAL APPLICABILITY

The present disclosure is particularly applicable to a flooded-type lead-acid battery. The lead-acid battery according to the present disclosure is suitable as a lead-acid battery for a vehicle controlled by ISS. The lead-acid battery can also be suitably used for a power supply of an industrial energy storage apparatus such as an electric vehicle (such as a forklift) and the like. These applications are merely examples. The applications of the lead-acid battery according to the present invention are not limited thereto.

DESCRIPTION OF REFERENCE SIGNS

1: lead-acid battery
2: negative electrode plate
3: positive electrode plate
4: separator
5: positive electrode shelf
6: negative electrode shelf
7: positive pole
8: penetrating connection body
9: negative pole
11: element
12: container
13: partition
14: cell chamber
15: lid
16: negative electrode terminal
17: positive electrode terminal
18: vent plug

**Claims**

1. A lead-acid battery comprising:

   a positive electrode plate;
   a negative electrode plate;
   a separator interposed between the positive electrode plate and the negative electrode plate; and
   an electrolyte solution,
   wherein the positive electrode plate contains a positive electrode material, the negative electrode plate contains a negative electrode material, the negative electrode material contains a Bi element, a content of the Bi element in the negative electrode material is 100 ppm or more and 300 ppm or less on a mass basis, the separator includes a resin substrate, and a conductive layer is provided between the negative electrode plate and the resin substrate.

2. The lead-acid battery according to claim 1, wherein the conductive layer contains a carbon material.

3. The lead-acid battery according to claim 2, wherein the carbon material is at least one selected from the group consisting of carbon black and carbon fiber.

4. The lead-acid battery according to any one of claims 1 to 3,
   wherein a thickness of the conductive layer is 1 $\mu$m or more and 30 $\mu$m or less.

5. The lead-acid battery according to any one of claims 1 to 3,
   wherein the conductive layer is disposed on a surface of the resin substrate.

6. The lead-acid battery according to any one of claims 1 to 3,
   wherein a ratio of a mass of the positive electrode material to a mass of the negative electrode material is 1.2 or more and 1.4 or less.

7. The lead-acid battery according to any one of claims 1 to 3, which is used for a vehicle that is idling-stop-controlled.

Fig. 1

## INTERNATIONAL SEARCH REPORT

| International application No. |
|---|
| **PCT/JP2023/034670** |

**A. CLASSIFICATION OF SUBJECT MATTER**

*H01M 10/06*(2006.01)i; *H01M 4/14*(2006.01)i; *H01M 4/62*(2006.01)i; *H01M 10/12*(2006.01)i; *H01M 50/414*(2021.01)i; *H01M 50/434*(2021.01)i; *H01M 50/44*(2021.01)i; *H01M 50/451*(2021.01)i; *H01M 50/46*(2021.01)i; *H01M 50/489*(2021.01)i
FI: H01M10/06 Z; H01M4/14 Q; H01M4/62 B; H01M10/12 K; H01M50/414; H01M50/434; H01M50/44; H01M50/451; H01M50/46; H01M50/489

According to International Patent Classification (IPC) or to both national classification and IPC

**B. FIELDS SEARCHED**

Minimum documentation searched (classification system followed by classification symbols)

H01M10/06; H01M4/14; H01M4/62; H01M10/12; H01M50/414; H01M50/434; H01M50/44; H01M50/451; H01M50/46; H01M50/489

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-79094 A (FURUKAWA BATTERY CO LTD) 27 April 2017 (2017-04-27) claim 1, paragraphs [0018], [0029] | 1-4, 6-7 |
| A | claim 1, paragraphs [0018], [0029] | 5 |
| Y | WO 2022/191150 A1 (ASAHI KASEI KABUSHIKI KAISHA) 15 September 2022 (2022-09-15) claim 1, paragraphs [0016], [0019], [0062] | 1-7 |
| Y | JP 2021-163612 A (FURUKAWA BATTERY CO LTD) 11 October 2021 (2021-10-11) paragraph [0018], examples 102, 103 | 1-7 |
| Y | JP 2006-79973 A (MATSUSHITA ELECTRIC IND CO LTD) 23 March 2006 (2006-03-23) paragraphs [0015]-[0016], fig. 1 | 1-7 |
| Y | JP 2004-281197 A (MATSUSHITA ELECTRIC IND CO LTD) 07 October 2004 (2004-10-07) paragraphs [0010], [0012], table 1 | 6 |

☑ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 December 2023** | **12 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| :--- |
| **PCT/JP2023/034670** |

**C.    DOCUMENTS CONSIDERED TO BE RELEVANT**

| Category* | Citation of document, with indication, where appropriate, of the relevant passages | Relevant to claim No. |
| :---: | :--- | :---: |
| Y | WO 2016/129021 A1 (GS YUASA INTERNATIONAL LTD) 18 August 2016 (2016-08-18) paragraph [0005], table 1 | 6 |

## INTERNATIONAL SEARCH REPORT
### Information on patent family members

International application No.

**PCT/JP2023/034670**

| Patent document cited in search report | | | Publication date (day/month/year) | Patent family member(s) | | | Publication date (day/month/year) |
|---|---|---|---|---|---|---|---|
| JP | 2017-79094 | A | 27 April 2017 | (Family: none) | | | |
| WO | 2022/191150 | A1 | 15 September 2022 | CN | 117157817 | A | |
| | | | | KR | 2023-0134569 | A | |
| JP | 2021-163612 | A | 11 October 2021 | (Family: none) | | | |
| JP | 2006-79973 | A | 23 March 2006 | (Family: none) | | | |
| JP | 2004-281197 | A | 07 October 2004 | (Family: none) | | | |
| WO | 2016/129021 | A1 | 18 August 2016 | US | 2018/0026310 | A1 | |
| | | | | paragraph [0006], table 1 | | | |
| | | | | CN | 107112598 | A | |

Form PCT/ISA/210 (patent family annex) (January 2015)

# EP 4 564 470 A1

## REFERENCES CITED IN THE DESCRIPTION

### Patent documents cited in the description

- JP 2020533741 W
- JP 2018530125 W
- JP 2021163612 A

- JP 2006079973 A
- JP 2003142085 A